# EUROPEAN PATENT APPLICATION

(11) **EP 2 111 042 A2**
(43) Date of publication of application: **21.10.2009**
(21) Application number: 09005063.4
(22) Date of filing: 06.04.2009
(51) Int. Cl.: H04N 5/64

(54) **Flat panel display**

(30) Priority: 17.04.2008 JP 2008108189
(71) Applicant: Funai Electric Co., Ltd., Nakagaito Daito-shi Osaka (JP)
(72) Inventor: Yamanaka, Takahito, Daito-shi, Osaka (JP)
(74) Representative: Grünecker, Kinkeldey, Stockmair & Schwanhäusser Anwaltssozietät

(57) **Abstract**

A flat panel display includes locating members each having a plate-shaped base part, a holding surface rising substantially perpendicularly from sides forming a corner of the base part, and a flange extending outward from the skirt of the holding surface and provided with through holes. The locating members are disposed with the base parts thereof facing a back surface of a display panel and the holding surfaces pressed against side surfaces forming corners of the display panel. Screws passed through the through holes are screwed into the internally threaded holes of bosses to locate the display panel on a front cabinet. The specifications of the display panel can be changed without changing the design of the front cabinet.

## Description

### BACKGROUND OF THE INVENTION

### 1. Field of the invention:

The present invention relates to a flat panel display assembled by fixedly placing a substantially rectangular display panel in a box-shaped front cabinet having a predetermined side provided with an opening, and fixing a rear cabinet to the front cabinet so as to cover the opening.

### 2. Description of the Related Art:

There is a known flat panel display built by fixedly holding a display panel in a box having a front cabinet and a rear cabinet. This known flat panel display is assembled by putting the display panel in the front cabinet through the predetermined opening formed in the front cabinet, fixing the display panel to the front cabinet, and fixing the rear cabinet to the front cabinet so as to cover the opening. The display panel is attached to the front cabinet by fixing members.
For example, in assembling a flat panel display disclosed in, for example, JP-A 2006-235425, a display panel is fixed to a front cabinet by fixing a panel holders having a crank-shaped cross section to a mounting flange protruding from a back light chassis forming a rear part of the flat panel display and to a front cabinet with screws.

A fixing structure disclosed in, for example, JP-A 2005-260499 fixes a flat display panel to a front cabinet by using lugs projecting from the side surfaces of the flat display panel and a concave chassis frame.

A fixing structure disclosed in, for example JP-A 2000-10082 fixes a liquid crystal display, namely, a display panel, to a cabinet by mounting hole changing members.

In some cases only the display panel is changed during the mass production of the foregoing flat panel display. In most cases, display panels of different makers have different external shapes, respectively. Therefore, the design of the fixing members and parts of the front cabinet fixed to the fixing members needs to be changed so as to conform to the shape of the display panel when only the display panel is changed.
Consequently, design change is necessary every time the specifications of the display panel are changed. Design change takes a long time and increases the cost.

### SUMMARY

The present invention provides a flat panel display provided with a display panel whose specifications can be changed without changing the design of the front cabinet.

The present invention provides A flat panel, comprising:
a substantially rectangular display panel positioned between a front cabinet having a predetermined opening and a rear cabinet that is coupled with the front cabinet;
locating members each having a plate-shaped base part, a holding surface rising substantially perpendicularly from sides forming a corner of the base part, and a flange extending outward from a skirt of the holding surface and provided with through holes;
the front cabinet has an inside surface provided with internally threaded holes into which screws passed through the through holes are to be screwed,
the locating members are disposed with the base parts thereof facing a back surface of the display panel placed in the front cabinet and the holding surfaces pressed against side surfaces that from corners of the display panel, and
screws passed through the through holes are screwed into the internally threaded holes to fix the locating members to the front cabinet.

In the flat panel display of the present invention thus formed, the locating members are fixed to the front cabinet by screwing the screws into the internally threaded holes of the front cabinet to position the display panel on the front cabinet. The locating members are disposed with the base parts thereof facing the back surface of the display panel placed in the front cabinet, the holding surfaces are pressed against the side surfaces forming the corners of the display panel, and the screws passed through the through holes are screwed into the internally threaded holes, respectively.
The locating members hold the side surfaces forming the corners of the display panel to locate the display panel and are fastened to the front cabinet with the screws. Therefore, only the locating members need to be changed and any changes in the front cabinet are unnecessary to deal with the change of the shape of the display panel. Since the display panel is fixed to the front cabinet after locating the corners of the display panel, any comparatively large fixing members are unnecessary and materials can be reduced to reduce the cost.
According to the present invention, only the locating member need to be changed as mentioned above when the shape of the display panel is changed and any changes do not need to be made in the front cabinet.

In a second mode of the present invention, the internally threaded holes are formed in first bosses protruding from the inside surface of the front cabinet, and the flange is provided with annular ribs respectively projecting from the edges of the through holes, and the flange is positioned on the front cabinet by fitting head parts of the first bosses in openings defined by the inside surfaces of the annular ribs, respectively.
In the second mode of the present invention, the locating member can be disposed at predetermined position, respectively, on the front cabinet by fitting the head parts of the first bosses in the annular ribs of the locating members, respectively. This construction can improve ease of assembling work.
In the second mode of the present invention, the locating member can be disposed at predetermined position, respectively, on the front cabinet. This construction can improve ease of assembling work.

In a third mode of the present invention, the base part is provided with a rib extending from the base part in a direction in which the holding surface extends and having a height below the holding surface.
In the third mode of the present invention, the rib formed in the base part enhances the strength of the locating member, and the rib presses the back surface of the display panel to hold the display panel firmly in place.
In the third mode of the present invention, the rib formed in the base part enhances the strength of the locating member, and the rib presses the back surface of the display panel to hold the display panel firmly in place.

In a fourth mode of the present invention, the rib protruding from the base part has the shape of a lattice. The rib having the shape of a lattice can more effectively enhance the strength of the locating member.
In the fourth mode of the present invention, the rib presses the back surface of the display panel to hold the display panel firmly in place.

In a fifth mode of the present invention, the front cabinet is provided with second bosses protruding perpendicularly from the inside surface facing the display surface of the display panel, having a length substantially equal to the thickness of the display panel and provided with internally threaded holes, respectively, screws each having a threaded part and a contact surface extending substantially perpendicularly to the axis of the threaded part are screwed in the internally threaded holes of the bosses so that the contact surfaces are in contact with edge parts of the display panel to fix the display panel to the front cabinet.
According to the present invention, fastening directions in which the screws exert fastening force are uniform and hence ease of assembling work can be improved.
In the fifth mode of the mode of the present invention, members only for fastening the display panel to the front cabinet can be omitted.

In a sixth mode of the present invention, the locating members are fixed with screws to the front cabinet so as to be disposed in the vicinity of two opposite corners of the flat panel display.
Thus, the display panel can be positioned on and fixed to the front cabinet by disposing the locating members diagonally opposite to each other. Therefore, members only for fixing the display panel to the front cabinet can be omitted.
In the sixth mode of the present invention, members only for fixing the display panel to the front cabinet can be omitted.

In a seventh mode of the present invention, the internally threaded holes are formed in first bosses protruding from the inside surface of the front cabinet, the flange has annular ribs protruding from the edges of the through holes, the flange is positioned on the front cabinet by fitting head parts of the bosses in holes defined by the inside surfaces of the annular ribs, the base part is provided with lattice-shaped ribs extending from the base part in a direction in which the holding surface extends and having a height below the holding surface, the front cabinet is provided with second bosses protruding perpendicularly from the inside surface facing the display surface of the display panel, having a length substantially equal to the thickness of the display panel and provided with internally threaded holes, respectively, screws each having a threaded part and a contact surface extending substantially perpendicularly to the axis of the threaded part are screwed in the internally threaded holes of the second bosses so that the contact surfaces are in contact with edge parts of the display panel to fix the display panel to the front cabinet.

This mode of the present invention has the effects mentioned above.

### BRIEF DESCRIPTION OF THE DRAWINGS

Fig. 1 is an exploded perspective view of a flat panel display in a preferred embodiment according to the present invention;
Fig. 2 is a schematic sectional view of a display panel 20, namely, a liquid crystal display panel, taken on the line A-A in Fig. 1;
Fig. 3 is a perspective rear view of a front cabinet 30;
Figs. 4, 5 and 6 are sectional views of the front cabinet taken on the line B-B, the line C-C and the line D-D, respectively, in Fig. 3;
Figs. 7 and 8 are perspective views of a locating member;
Figs. 9 and 10 are sectional views, respectively, of a display panel having a width w1 and a height h1 fixed to the front cabinet 30;
Figs. 11 and 12 are sectional views, respectively, of a display panel having a width w2 and a height h2 fixed to a front cabinet; and
Fig. 13 is a rear view of a front cabinet to which a display panel is fixed in a modification.

### DETAILED DESCRIPTION OF THE PREFERRED EMBODIMENT

Preferred embodiments of the present invention will be described in the following order with reference to the accompanying drawings, in which like or corresponding parts are designated by the same reference characters and the duplicate description thereof will be omitted.
1. First Embodiment
2. Second Embodiment

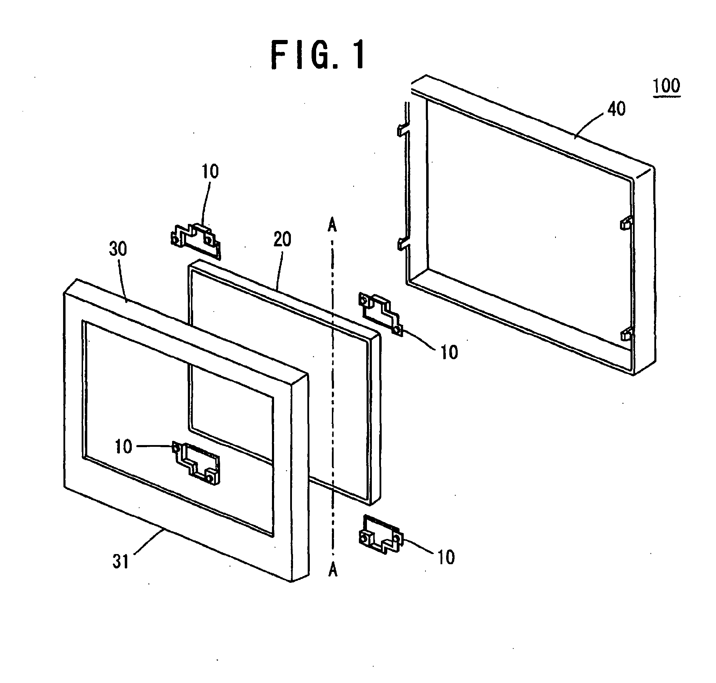

Fig. 1 is an exploded perspective view of a flat panel display 100 in a first embodiment according to the present invention. The flat panel display 100 includes a substantially rectangular display panel 20 capable of displaying images, a front cabinet 30 forming a front part of a cabinet for holding the display panel 20 therein, and a rear cabinet 40 forming a rear part of the cabinet.
The flat panel display 100 is assembled by putting the display panel 20 in the front cabinet 30 through the open rear end 31 of the front cabinet 30 and fixing the display panel 20 to the front cabinet 30, and then fixedly joining the rear cabinet 40 to the front cabinet 30 so as to cover the open rear end 31 of the front cabinet 30. The display panel 20 is fixed to the front panel 30 after being positioned on the front cabinet 30 by locating members 10. A driving board, not shown, for driving the display panel 20 is attached to the back surface of the display panel 20.

The display panel 20 is capable of displaying images on the basis of image signals given thereto by a predetermined method. The display panel 20 of this embodiment is a liquid crystal display panel that displays images by driving a liquid crystal material or a plasma display panel that displays images by the agency of plasma discharge. The driving method of driving the display panel 20 does not concern the present invention and the method of driving the liquid crystal material is not limited to the method mentioned above.

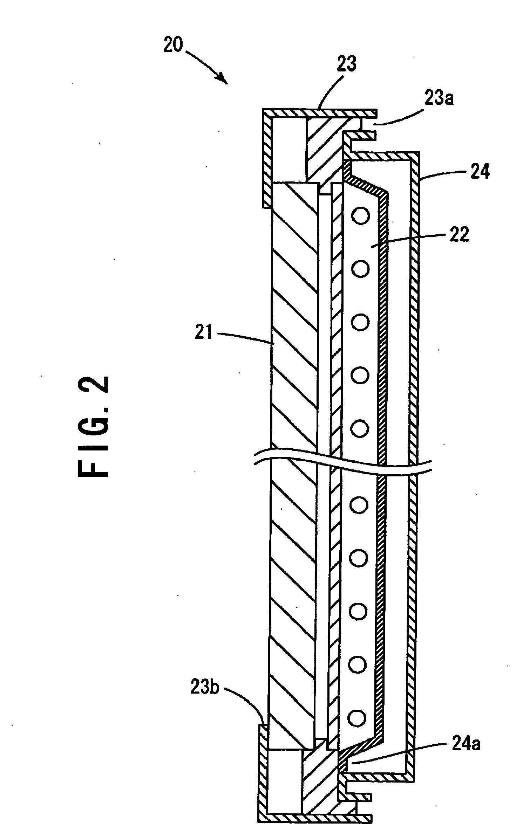

Fig. 2 is a schematic sectional view of the display panel 20, namely, a liquid crystal display panel, taken on the line A-A in Fig. 1. The display panel 20 will be supposed to be a display panel of a back light illumination system herein as shown in Fig. 1, but the display panel 20 may be any other illumination system, such as a side light illumination system.

Referring to Fig. 2, the display panel 20 includes a panel body 21 including a liquid crystal layer and drive circuits for driving the liquid crystal layer, a back light unit 22 for illuminating the panel body 21 from behind the panel body 21, a front frame 23 holding the panel body 21, and a rear frame 24 holding the back light unit 22.
The front frame 23 has the shape of a thin box. The front frame has a front side provided with a window 23b in which the front surface of the panel body 21 is exposed, and an open rear side 23a opposite the front side. The rear frame 24 has the shape of a thin box and has an open front side 24a.

The display panel 20 is assembled by the following method. First, the back light unit 22 is fixed to the back surface of the panel body 21, and then the panel body 21 is put in the front frame 23 through the open rear side 23a. The rear frame 24 is disposed behind the panel body 21 and the back light unit 22 so as to cover the open rear side 23a of the front frame 23 partly. Then, the rear frame 24 is fixed to the front frame 23. In this state, the perimeter of a rear part of the display panel 20 is surrounded by the skirt of the front frame 23. A rear part of the rear frame 24 protrudes by a predetermined depth in an opening defined by the skirt. Therefore, the rear part of the display panel 20 does not have the shape of a uniform surface.

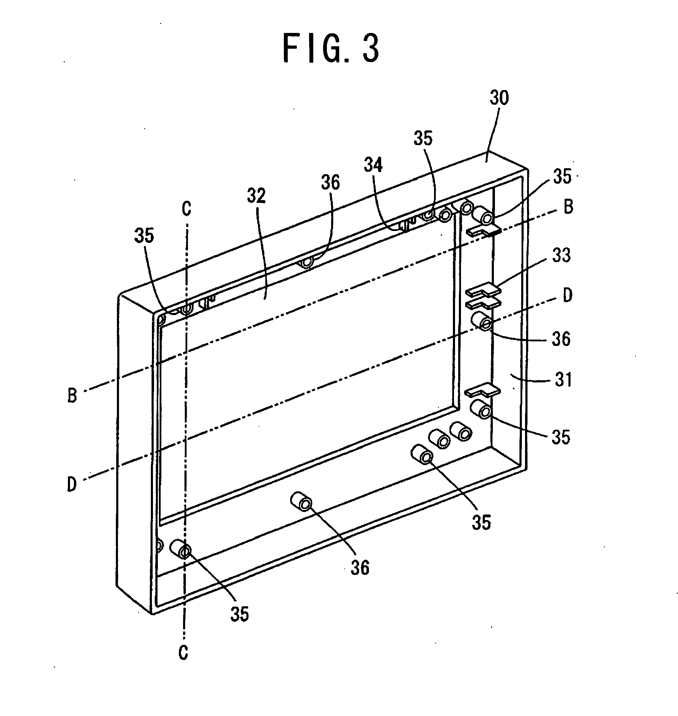

The front cabinet 30 is capable of fixedly holding the display panel 20 therein. Fig. 3 is a rear perspective view of the front cabinet 30. The front cabinet 30 has the shape of a thin box. The front cabinet 30 has a front wall provided with a window 32 in which the display surface of the display panel 20 is exposed, and an open rear end 31. In the front cabinet 30, locating ribs 33 and 34, first bosses 35 and second bosses 36, which rise from the inside surface of the front cabinet 30 perpendicularly to the inside surface of the front cabinet 30, are arranged around the window 32. The front cabinet 30 of this embodiment is made of a hard resin.

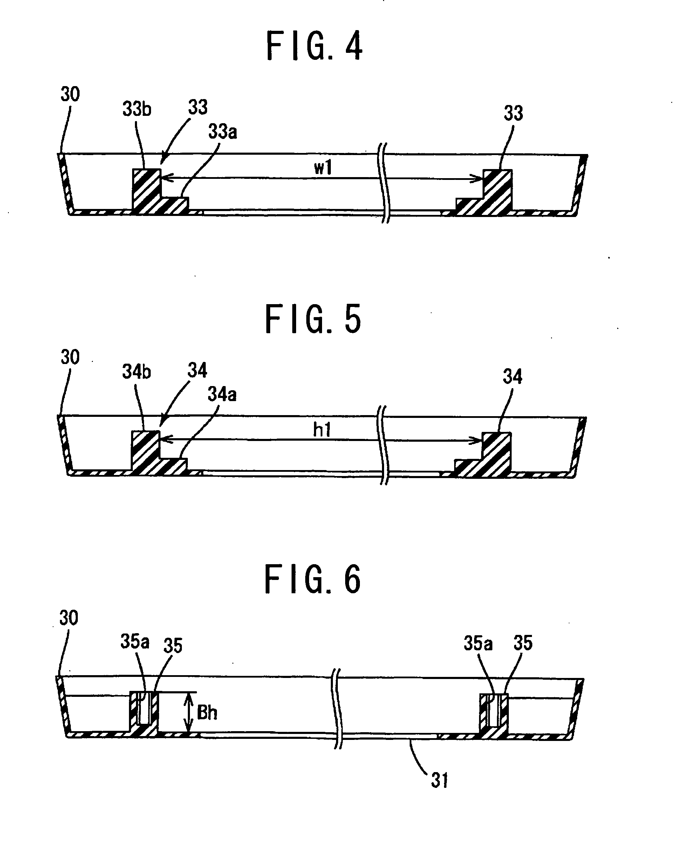

Figs. 4, 5 and 6 are sectional views of the front cabinet 30 taken on the lines B-B, C-C and D-D, respectively, in Fig. 3. Fig. 4 is a sectional view taken on the line B-B, Fig. 5 is a sectional view taken on the line C-C and Fig. 6 is a sectional view taken on the line D-D.

Referring to Fig. 4, locating ribs 33 are formed on the inside surface of the front cabinet 30 opposite to each other with respect to a direction along the width of the front cabinet 30. Each of the locating ribs 33 has a base part 33a rising from the inside surface of the front cabinet 30, and a vertical side holding part 33b extending from the base part 33a. The locating ribs 33 are formed substantially in an L-shape. The distance between the vertical side holding parts 33b corresponds to the width of the display panel 20

In the front cabinet 30 of this embodiment, the distance between the horizontal side holding parts 33b transversely opposite to each other is substantially equal to the width w1 of the largest display panel 20 that can be held in the front cabinet 30. The locating ribs 33 are used for locating the display panel 20 of the width w1 in the front cabinet 30. The locating members 10 are used for locating a display panel having a width other than the width w1 in the front cabinet 30.

Referring to Fig. 5, locating ribs 34 are formed on the inside surface of the front cabinet 30 opposite to each other with respect to a direction along the height h of the front cabinet 30. Each of the locating ribs 34 has a base part 34a rising from the inside surface of the front cabinet 30 and a horizontal side holding part 34b extending from the base part 34a. The locating ribs 34 are formed substantially in an L-shape. The distance between the horizontal side holding parts 34b corresponds to the height of the display panel 20.

In the front cabinet 30 of this embodiment, the distance between the horizontal side holding parts 34b vertically opposite to each other is substantially equal to the height h1 of the largest display panel 20 that can be held in the front cabinet 30. The locating ribs 34 are used for locating the display panel 20 of the height h1 in the front cabinet 30. The locating members 10 are used for locating a display panel having a height other than the height h1 in the front cabinet 30.

Referring to Fig. 6, bosses 35 are formed on the inside surface of the front wall of the front cabinet 30. The bosses 35 are arranged along the perimeter of the open rear end 31 of the front cabinet 30. The bosses 35 have a height Bh substantially equal to the distance between the inside surface of the front wall of the front cabinet 30 and the back surface of the display panel 20 supported on the locating ribs 33 and 34. The bosses 35 are provided with internally threaded holes 35a, respectively. The internally threaded holes 35a are provided with an internal thread of a predetermined size.

The rear cabinet 40 covers the open rear end 31. The rear cabinet 40 is joined to the front cabinet 30 to form the cabinet of the flat panel display 100. The rear cabinet 40 has the shape of a thin box and has an open front end facing the open rear end 31 of the front cabinet 30.

The locating member 10 locates the display panel 20 in the front cabinet 30. The locating member 10 holds the display panel 20 by the adjacent sides 10a of the display panel 20 forming a corner to locate the display panel 20 on the front cabinet 30.

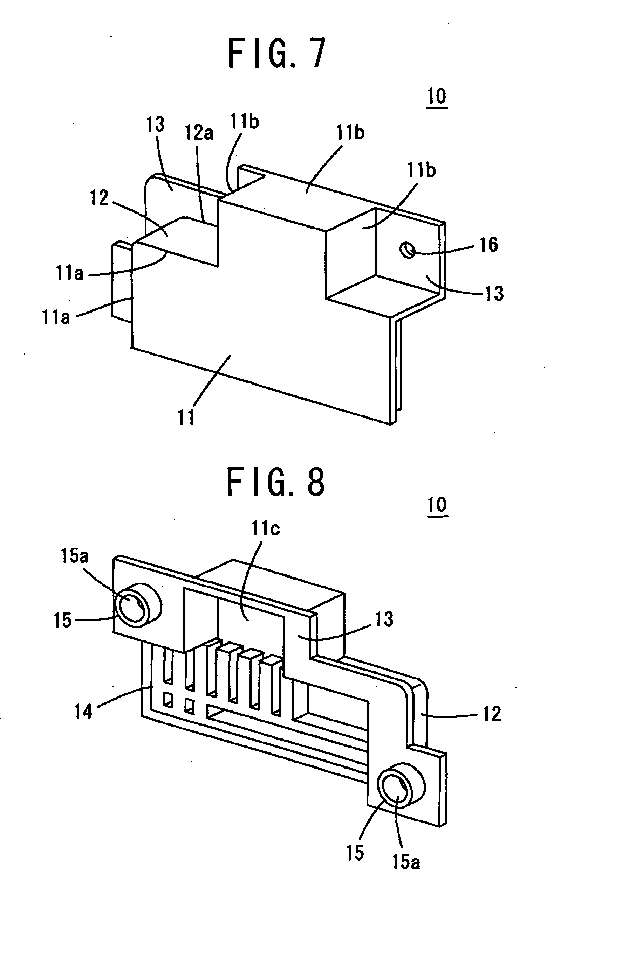

Figs. 7 and 8 are perspective views of assistance in describing the locating member 10. Fig. 7 is a perspective view of the locating member 10 as viewed from behind the flat panel display 100. Fig. 8 is a perspective view of the locating member 10 as viewed from the front side of the flat panel display 100.

Referring to Figs. 7 and 8, the locating member 10 has a plate-shaped base part 11, holding parts 12 extending substantially perpendicularly from sides 11a forming corners of the base part 11, and flanges 13 extending outward from the skirts 12a of the holding parts 12. In each of the locating members 10 of this embodiment, the base part has an upward protruding part, and side walls 11b substantially perpendicularly extending from the upper edge and the side edges of the upward protruding part of the base part 11. The upward protruding part of the base part 11 and the side walls 11b define an upper space 11c.

Ribs 14 are formed on the inside surface of the base part 11. Some of the ribs 14 are formed in the shape of a lattice. The ribs 14 reinforce the locating member 10 and come into contact with the back surface of the display panel 20 to locate the display panel 20 on the front cabinet 30.

The flange 13 is provided with annular locating ribs 15. The diameter of a hole 15a formed in the locating rib 15 is substantially equal to the outside diameter of the second boss 36 of the front cabinet 30. Through holes 16 respectively for receiving screws are formed in parts of the flange 13 corresponding to the annular ribs 15, respectively. Head parts of the second bosses 36 are fitted in the holes 15a of the locating ribs 15 to locate the locating member 10 on the front cabinet 30 and screws passed through the through holes 16 are screwed in the internally threaded holes of the second bosses 36 to fix the locating member 10 to the front cabinet 30, which facilitates assembling work. The locating members 10 of this embodiment are made of a resin. However, the material of the locating members 10 is not limited to the resin.

Desirably, at least one of the through holes 16 formed in the flange 13 is a slot. The slot can absorb dimensional errors in the internally threaded holes of the second bosses 36 and prevents troubles in attaching the locating member 10 to the front cabinet 30.

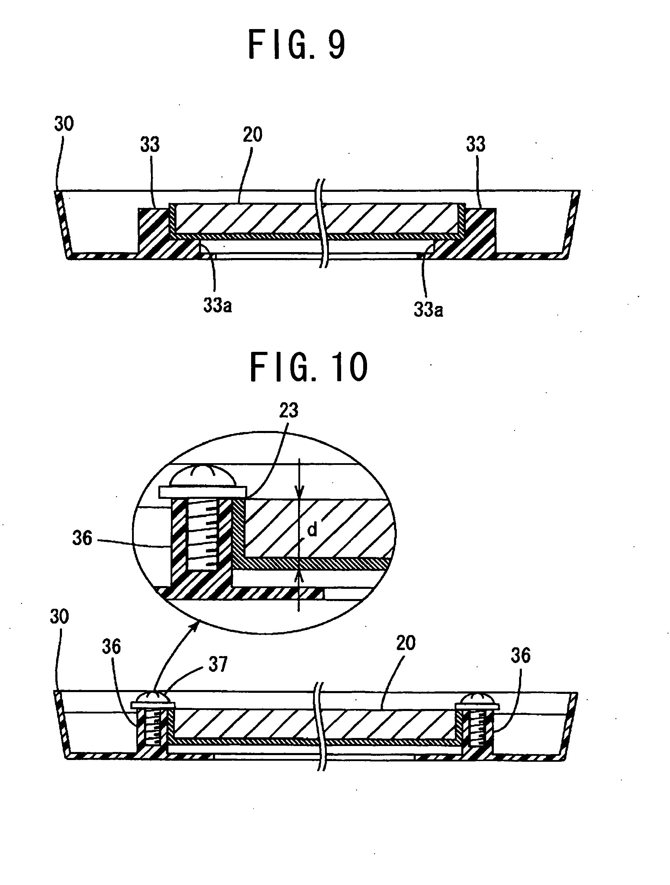

1.2. Method of Assembling the Flat Panel Display A method of assembling the flat panel display 100 of the present invention will be described with reference to Figs. 9, 10, 11 and 12. Figs. 9 and 10 are sectional views of the front cabinet 30 fixedly holding a display panel having a width w1 and a height h1 taken on the line B-B and on the line C-C in Fig. 3, respectively.

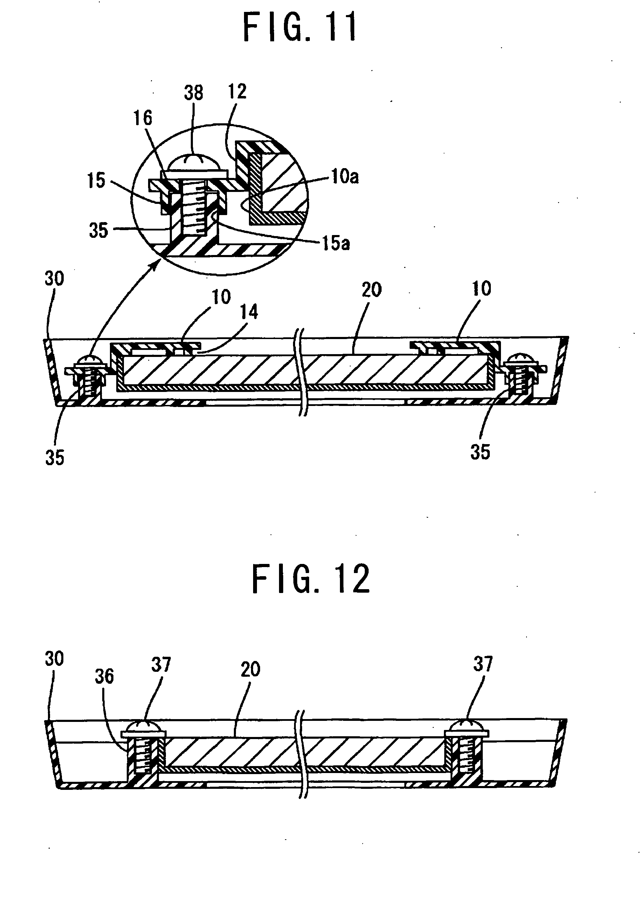

Figs. 11 and 12 are sectional views of the front cabinet 30 fixedly holding a display panel having a width w2 and a height h2. The widths w1 and w2 and the heights h1 and h2 meet conditions expressed by w1 > w2 and h1 > h2.

Referring to Figs. 9 and 10, to hold the display panel 20 having the width w1 and the height h1 fixedly on the front cabinet 30, edges of the display panel 20 on the side of the display surface are seated on the base parts 33a and 34a of the locating ribs 33 and 34. As mentioned above, the distance between the vertical side holding parts 33b of the locating ribs 33 and the distance between the horizontal side holding parts 34b of the locating ribs 34 correspond to the width w1 and the height h1 of the display panel 20, respectively. When the display panel 20 is seated on the locating ribs 33 and 34, the display panel 20 is located and is restrained from movement in the directions of the width and the height of the display panel 20 by the locating ribs 33 and 34.

As shown in Fig. 10, collar screws 37 are screwed into the second bosses 37 to fix the display panel 20 to the front cabinet 30. The front frame 23 of the display panel 20 is pressed in the direction of its thickness d against the base parts 33a and 34a of the locating ribs 33 and 34 by the collar screws 37 to fix the display panel 20 to the front cabinet 30. Then, the rear cabinet 40 is fastened to the front cabinet 30 with screws so as to cover the open rear end 31 of the front cabinet 30. Since the collar screws 37 are screwed into the second bosses 37 in the same direction, the operator can work in the same position and ease of assembling work can be improved.
Screws and washers may be used instead of the collar screws 37 for fixing the display panel 20 to the front cabinet 30.

A method of fixing the display panel 20 having the width w2 and the height h2 to the front cabinet 30 will be described with reference to Figs. 11 and 12. The display panel 20 is seated on the base parts 33a and 34a of the locating ribs 33 and 34. Since the distance between the vertical side holding parts 33b of the locating ribs 33 substantially equal to the width w1 and the distance between the vertical side holding parts 34b of the locating ribs 34 substantially equal to the height h1 are greater than the width w2 and the height h2 of the display panel 20, respectively, the display panel 20 cannot be located on the front cabinet 30 when the display panel 20 is seated on the locating ribs 33 and 34.

As shown in Fig. 11, the locating member 10 is fastened to the front cabinet 30 with screws to locate a corner of the display panel 20. The base part 11 of the locating member 10 is disposed opposite to the edges of the back surface of the display panel 20 with the holding part 12 of the locating member 10 in close contact with the sides 10a of the display panel 20 and the head parts of the first bosses 35 fitted in the holes 15a of the annular locating ribs 15 of the flange 13. Then, threaded parts of screws 38 are passed through the through holes 16 and are screwed into the internally threaded holes of the first bosses 35 to fasten the locating member 10 to the front cabinet 30. The display panel 20 is located on the front cabinet 30 by the holding part 12 of the locating member 10.

In this state, the ribs 14 of the locating member 10 partly formed in the shape of a lattice are in contact with the back surface of the display panel 20 to hold the display panel 20 on the front cabinet 30. Therefore, even if the display panel 20 has an irregular back surface, it is possible to prevent the warp of the base part 11 of the locating member 10 caused by force acting on the locating member 10 and the unsatisfactory pressing of the display panel 20 against the front cabinet 30.

Subsequently, other corners of the display panel 20 are located on the front cabinet 30 by the locating members 10. As shown in Fig. 12, collar screws 37 are screwed into the second bosses 36 to fix the display panel 20 to the front cabinet 30. Then, the rear cabinet 40 is fixed to the front cabinet 30 so as to cover the open rear end 31 of the front cabinet 30.

2. Second Embodiment The first embodiment uses the locating members 10 for locating the display panel 20 on the front cabinet 30. The locating members 10 may be used for fixing the display panel 20 to the front cabinet 30. When the display panel 20 is a small one, such as a 15 in. display panel, the display panel 20 has a small weight. Such a light display panel 20 can be satisfactorily fixed to the front cabinet 30 only by the locating members 10.

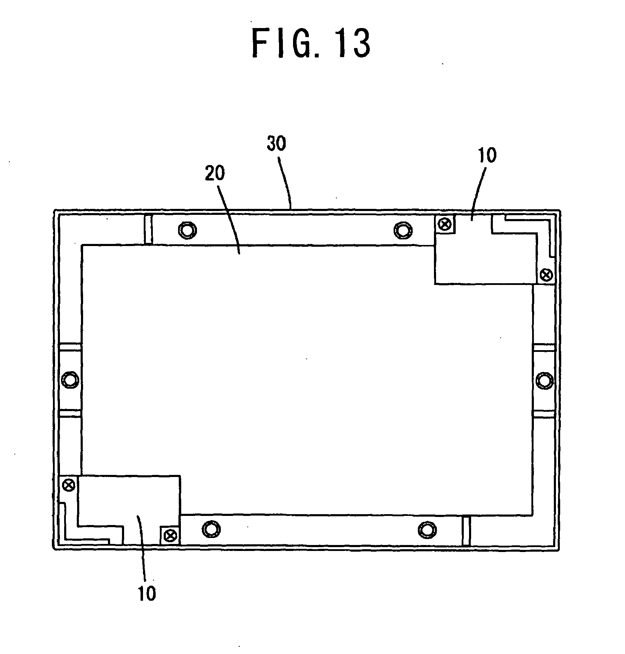

Fig. 13 is a rear view of a front cabinet 30 in a modification and a display panel 20 fixed to the front cabinet 30. Since diagonally opposite corners of the display panel 20 are located on and fixed to the front cabinet 30 by locating members 10, parts like the first bosses 35 and the screws for fixing the display panel 30 to the front cabinet 30 are not necessary and work for assembling a flat panel display 100 can be reduced. Consequently, time for assembling the flat panel display 100 can be curtailed.
While the invention has been particularly shown and described with respect to preferred embodiments thereof, it should be understood by those skilled in the art that the foregoing and other changes in form and detail may be made therein without departing from the spirit and scope of the invention as defined in the appended claims.

Needless to say, the present invention is not limited to the above mentioned embodiment. As will be apparent to those skilled in the art, the following may be disclosed as exemplary embodiments of the present invention:
- To use members, structures, and the like disclosed in the above embodiment replaceable with each other by properly changing their combination.
- To use what are not disclosed in the above embodiment but are of known art and replaceable with the members, structures, and the like disclosed in the above embodiment by properly replacing them with each other or by changing their combination.
- To properly use members, structures, and the like not disclosed in the above embodiment but thought of by those skilled in the art as substitutes for them on the basis of known art and the like or, further, with changes made in their combination.

## Claims

1. A flat panel, comprising:
a substantially rectangular display panel positioned between a front cabinet having a predetermined opening and a rear cabinet that is coupled with the front cabinet;
locating members each having a plate-shaped base part, a holding surface rising substantially perpendicularly from sides forming a corner of the base part, and a flange extending outward from a skirt of the holding surface and provided with through holes;
the front cabinet has an inside surface provided with internally threaded holes into which screws passed through the through holes are to be screwed,
the locating members are disposed with the base parts thereof facing a back surface of the display panel placed in the front cabinet and the holding surfaces pressed against side surfaces that from corners of the display panel, and
screws passed through the through holes are screwed into the internally threaded holes to fix the locating members to the front cabinet.

2. The flat panel display according to claim 1, wherein:
the internally threaded holes are formed in first bosses protruding from the inside surface of the front cabinet, and
the flange is provided with annular ribs respectively projecting from the edges of the through holes and positioned on the front cabinet by fitting head parts of the first bosses in openings respectively defined by the inside surfaces of the annular ribs.

3. The flat panel display according to claim 1, wherein:
the base part is provided with ribs extending from the base part in a direction in which the holding surface extends and having a height below the holding surface.

4. The flat panel display according to claim 3, wherein:
the ribs protruding from the base part have the shape of a lattice.

5. The flat panel display according to any of claims 1 to 4, wherein:
the front cabinet is provided with second bosses protruding perpendicularly from the inside surface facing the display surface of the display panel, having a length substantially equal to the thickness of the display panel and provided with internally threaded holes, respectively, screws each having a threaded part and a contact surface extending substantially perpendicularly to the axis of the threaded part are screwed in the internally threaded holes of the bosses so that the contact surfaces are in contact with edge parts of the display panel to fix the display panel to the front cabinet.

6. The flat panel display according to any of claims 1 to 5, wherein:
the locating members are fixed with screws to the front cabinet so as to be disposed in the vicinity of two opposite corners of the flat panel display.

7. The flat panel display according to claim 1, wherein:
the internally threaded holes are formed in first bosses protruding from the inside surface of the front cabinet,
the flange has annular ribs protruding from the edges of the through holes,
the flange is positioned on the front cabinet by fitting head parts of the bosses in holes defined by the inside surfaces of the annular ribs,
the base part is provided with lattice-shaped ribs extending from the base part in a direction in which the holding surface extends and having a height below the holding surface,
the front cabinet is provided with second bosses protruding perpendicularly from the inside surface facing the display surface of the display panel, having a length substantially equal to the thickness of the display panel and provided with internally threaded holes, respectively, screws each having a threaded part and a contact surface extending substantially perpendicularly to the axis of the threaded part are screwed in the internally threaded holes of the second bosses so that the contact surfaces are in contact with edge parts of the display panel to fix the display panel to the front cabinet.
